# EUROPÄISCHE PATENTSCHRIFT

(11) **EP 4 014 027 B1**
(45) Veröffentlichungstag und Bekanntmachung des Hinweises auf die Patenterteilung: **18.03.2026**
(21) Anmeldenummer: 20745177.4
(22) Anmeldetag: 22.07.2020
(51) Int. Cl.: G01N 21/95, H02S 50/15

(54) **VERFAHREN UND VORRICHTUNG ZUR ANALYSE EINER MEHRFACHSOLARZELLE MIT ZUMINDEST ZWEI SUB-SOLARZELLEN MITTELS LUMINESZENZSTRAHLUNG**
METHOD AND DEVICE FOR ANALYSING A MULTIPLE SOLAR CELL WITH AT LEAST TWO SUB-SOLAR CELLS BY MEANS OF LUMINESCENT RADIATION
PROCÉDÉ ET DISPOSITIF D'ANALYSE D'UNE CELLULE SOLAIRE MULTIJONCTION DOTÉE D'AU MOINS DEUX SOUS-CELLULES SOLAIRES AU MOYEN D'UN RAYONNEMENT LUMINESCENT

(30) Priorität: 13.08.2019 DE 102019121807
(43) Veröffentlichungstag der Anmeldung: 22.06.2022
(73) Patentinhaber: Fraunhofer-Gesellschaft zur Förderung der angewandten Forschung e.V., 80686 München (DE)
(72) Erfinder: GREULICH, Johannes, 79110 Freiburg (DE)
(74) Vertreter: LBP Lemcke, Brommer & Partner Patentanwälte mbB
(86) Internationale Anmeldenummer: PCT/EP2020/070695
(87) Internationale Veröffentlichungsnummer: WO 2021/028175

(56) Entgegenhaltungen:
- EP-A1- 2 378 278
- FR-A1- 3 038 165
- US-B2- 10 199 985
- CLAUS G ZIMMERMANN: "Performance Mapping of Multijunction Solar Cells Based on Electroluminescence", IEEE ELECTRON DEVICE LETTERS, IEEE, USA, vol. 30, no. 8, 1 August 2009 (2009-08-01), pages 825 - 827, XP011263984, ISSN: 0741-3106

## Beschreibung

Bei dotierten Halbleitersubstraten, insbesondere bei Siliziumwafern und hierauf basierenden Bauelementen wie photovoltaischen Solarzellen, ist es bekannt, anhand einer im Halbleiter erzeugten Lumineszenzstrahlung und deren Messung Aufschluss über Materialparameter des Halbleitersubstrates oder Eigenschaften des Bauelementes zu erlangen. Eine solche Vorrichtung ist in WO 2007/041758 A1 und in EP 1 840 541 A1 beschrieben.

Darüber hinaus bietet die Analyse mittels Lumineszenzstrahlung den Vorteil, dass auch Halbleiterbauelemente, welche mehrere pn-Übergänge aufweisen, analysiert werden können: Beispielsweise sind zur Steigerung des Wirkungsgrads Mehrfachsolarzellen bekannt, bei welchen in einer Schichtstruktur mehrere pn-Übergänge übereinander angeordnet sind, sodass ausgehend von einer der einfallenden Strahlung zugewandten Oberfläche der Solarzelle mehrere Sub-Solarzellen übereinanderliegen. Diese Sub-Solarzellen sind zur Konversion unterschiedlicher Spektralanteile der einfallenden Strahlung optimiert, wobei typischerweise die weiter obenliegenden Sub-Solarzellen für Spektralbereiche kürzerer Wellenlänge und die weiter unten liegenden Sub-Solarzellen für Spektralbereiche größerer Wellenlänge, welche eine größere Eindringtiefe aufweisen, optimiert sind.

Auch solche Mehrfachsolarzellen können mittels Lumineszenzstrahlung analysiert werden. Insbesondere senden die verschiedenen Sub-Solarzellen bei typischen Mehrfachsolarzellen Lumineszenzstrahlung in unterschiedlichen Wellenlängenbereichen aus, sodass eine Auftrennung der abgestrahlten Lumineszenzstrahlung separate Analysen der einzelnen Sub-Solarzellen ermöglicht. Hierbei erfolgt eine ortsaufgelöste Detektion der abgestrahlten Lumineszenzstrahlung, sodass zusätzlich eine ortsaufgelöste Analyse jeder Sub-Solarzelle erfolgen kann.

Eine solche Verwendung von Lumineszenzstrahlung zur Analyse einer Mehrfachsolarzelle mit zwei Sub-Solarzellen (einer Tandem-Solarzelle) mittels Lumineszenzstrahlung ist in IEEE JOURNAL OF PHOTOVOLTAICS, VOL. 7, NO. 4, JULY 2017 108, Nondestructive Probing of Perovskite Silicon Tandem Solar Cells Using Multiwavelength Photoluminescence Mapping, Laura E. Mundt et al. beschrieben. Hierbei werden zwei unterschiedliche Detektoren für Lumineszenzstrahlung verwendet, welche zur Detektion von Lumineszenzstrahlung in unterschiedlichen Wellenlängenbereichen ausgebildet sind, sodass ein erster Detektor zur Analyse der ersten Sub-Solarzelle und ein zweiter Detektor zur Analyse der zweiten Sub-Solarzelle verwendet wird. Weitere Verfahren zur Messung von Mehrfachsolarzellen sind aus EP 2 378 278 A1 sowie aus FR 3 038 165 bekannt.

Mit der zunehmenden Übertragung von Herstellungsprozessen für Mehrfachsolarzellen aus dem Labormaßstab in die industrielle Produktion besteht ein Bedarf, Mehrfachsolarzellen kostengünstig zu analysieren.

Der vorliegenden Erfindung liegt daher die Aufgabe zugrunde, ein Verfahren und eine Vorrichtung zur Analyse einer Mehrfachsolarzelle mit mindestens zwei Sub-Solarzellen mittels Lumineszenzstrahlung zur Verfügung zu stellen, welche fehlerunanfällig und kostengünstig sind.

Gelöst ist diese Aufgabe durch ein Verfahren gemäß Anspruch 1 sowie eine Vorrichtung gemäß Anspruch 7. Vorteilhafte Ausgestaltungen finden sich in den abhängigen Unteransprüchen.

Das erfindungsgemäße Verfahren ist bevorzugt zum Durchführen mittels der erfindungsgemäßen Vorrichtung, insbesondere einer vorteilhaften Ausführungsform hiervon, ausgebildet. Die erfindungsgemäße Vorrichtung ist bevorzugt zur Durchführung des erfindungsgemäßen Verfahrens, insbesondere einer bevorzugten Ausführungsform hiervon, ausgebildet.

Das erfindungsgemäße Verfahren zur Analyse einer Mehrfachsolarzelle mit zumindest zwei Sub-Solarzellen mittels Lumineszenzstrahlung weist einen Verfahrensschritt A auf, in welchem Lumineszenzstrahlung in den Sub-Solarzellen durch Beaufschlagen der Mehrfachsolarzelle mit Anregungsstrahlung und/oder Anlegen einer elektrischen Spannung an Kontakte der Mehrfachsolarzelle erzeugt wird. In den Sub-Solarzellen wird somit in an sich bekannter Weise Lumineszenzstrahlung erzeugt, zum Durchführen eines sogenannten Elektrolumineszenzverfahrens und/oder Photolumineszenzverfahrens.

In einem Verfahrensschritt B erfolgt ein ortsaufgelöstes Erfassen der Lumineszenzstrahlung mittels zumindest eines Multielementdetektors mit einer Mehrzahl von Detektorelementen und ein Auswerten unterschiedlicher Spektralbereiche der Lumineszenzstrahlung für die unterschiedlichen Sub-Solarzellen.

Es ist somit eine separate Analyse der einzelnen Sub-Solarzellen aufgrund der Auswertung der unterschiedlichen Spektralbereiche der Lumineszenzstrahlung möglich, wobei jede Sub-Solarzelle ortsaufgelöst analysiert werden kann.

Wesentlich ist, dass in Verfahrensschritt B die Detektorelemente gleichzeitig mit von der Mehrfachsolarzelle abgestrahlter Lumineszenzstrahlung beaufschlagt werden, wobei mittels einer ersten Gruppe von Detektorelementen ein erster Spektralbereich und mittels zumindest einer zweiten, zu der ersten Gruppe unterschiedlichen Gruppe von Detektorelementen zumindest ein zweiter Spektralbereich erfasst wird, wobei erster und zweiter Spektralbereich und gegebenenfalls die weiteren Spektralbereiche unterschiedlich sind und die spektralen Empfindlichkeiten unterschiedlicher Gruppen von Detektorelementen unterschiedliche spektrale Schwerpunkte aufweisen. Die Intensität der Lumineszenzstrahlung wird in einem Überlappungs-Spektralbereich, in welchem die Sensitivität der zumindest zwei Gruppen von Detektorelementen überlappen, abgeschwächt oder vollständig geblockt.

Das erfindungsgemäße Verfahren sieht somit bei Verwendung eines Multielementdetektors eine Unterteilung der Detektorelemente des Multielementdetektors in zumindest zwei Gruppen vor, die unterschiedlichen Spektralbereichen zugeordnet sind.

Hierdurch kann auf die Verwendung mehrerer separater Detektoren für unterschiedliche Spektralbereiche und ein mechanisches Austauschen dieser Detektoren oder ein mechanisches Auswechseln von optischen Filtern zur Detektion unterschiedlicher Spektralbereiche verzichtet werden. Das Verfahren ist somit mit einer Vorrichtung durchführbar, welche weniger und/oder weniger bewegte Teile aufweist, sodass eine schnellere und kostengünstigere Durchführung ermöglicht wird.

Die genannte Aufgabe ist weiterhin durch eine erfindungsgemäße Vorrichtung gemäß Anspruch 7 gelöst. Die Vorrichtung zur Analyse einer Mehrfachsolarzelle mit zumindest zwei Sub-Solarzellen mittels Lumineszenzstrahlung weist eine Anregungseinheit zum Anlegen einer elektrischen Spannung an die Mehrfachsolarzelle und/oder zum Beaufschlagen der Mehrfachsolarzelle mit elektromagnetischer Anregungsstrahlung auf, um Lumineszenzstrahlung in den Sub-Solarzellen zu erzeugen. Weiterhin weist die Vorrichtung eine Empfangseinheit auf, welche einen Multielementdetektor mit einer Mehrzahl von Detektorelementen aufweist und ausgebildet ist, von der Mehrfachsolarzelle ausgesandte Lumineszenzstrahlung mittels der Detektorelemente ortsaufgelöst zu erfassen. Weiterhin weist die Vorrichtung eine Auswerteeinheit zur Auswertung der Messsignale der Detektorelemente auf. Die Intensität der Lumineszenzstrahlung wird in einem Überlappungs-Spektralbereich, in welchem die Sensitivität der zumindest zwei Gruppen von Detektorelementen überlappen, abgeschwächt oder vollständig geblockt.

Die Vorrichtung ist somit zur Durchführung einer Analyse mittels Photolumineszenz und/oder Elektrolumineszenz ausgebildet.

Wesentlich ist, dass die Vorrichtung ausgebildet ist, eine erste Gruppe von Detektorelementen mit einem ersten Spektralbereich der Lumineszenzstrahlung und zumindest eine zweite, zu der ersten Gruppe unterschiedlichen Gruppe von Detektorelementen gleichzeitig mit zumindest einem zweiten Spektralbereich der Lumineszenzstrahlung zu beaufschlagen, wobei erster und zweiter Spektralbereich und gegebenenfalls weitere Spektralbereiche unterschiedlich sind.

Hierdurch ergeben sich die vorangehend bei Beschreibung des erfindungsgemäßen Verfahrens genannten Vorteile.

Vorteilhafterweise werden die Messsignale der Detektorelemente des Multielementdetektors gruppenweise ausgebildet. Hierdurch kann in einfacher Weise eine Auswertung der ersten Gruppe der einen Sub-Solarzelle und eine Auswertung der zweiten Gruppe der zweiten Sub-Solarzelle zugeordnet werden. Insbesondere ist es somit vorteilhaft, dass die Messsignale der ersten Gruppe zur Analyse einer der Sub-Solarzelle und die Messsignale der zweiten Gruppe zur Analyse der anderen Sub-Solarzelle verwendet werden.

Zum Durchführen einer schnellen und unaufwendigen Analyse ist es vorteilhaft, dass mittels des Multielementdetektors zumindest ein Bild der Lumineszenzstrahlung aufgenommen wird, zu welchem gruppenweise die Messsignale der ersten Gruppe von Detektorelementen und der zweiten Gruppe von Detektorelementen separat ausgewertet werden. Da darüber hinaus die Detektorelemente des Multielementdetektors gleichzeitig mit von der Mehrfachsolarzelle abgestrahlter Lumineszenz beaufschlagt werden, kann somit in einer weiter vorteilhaften Ausführungsform mit einer geringen Anzahl von Bildern, insbesondere mit lediglich einem Bild, eine Auswertung beider Spektralbereiche und somit Analyse beider Sub-Solarzellen vorgenommen werden.

Untersuchungen des Anmelders zeigen, dass häufig die Lumineszenzstrahlung unterschiedlicher Sub-Solarzellen mit unterschiedlicher Intensität ausgesandt wird. Um dennoch eine zeitsparende gleichzeitige Analyse beider Sub-Solarzellen zu ermöglichen, wird vorteilhafterweise selektiv die Lumineszenzstrahlung derjenigen Sub-Solarzelle abgeschwächt, deren Lumineszenzstrahlung eine höhere Intensität gegenüber der anderen Sub-Solarzelle aufweist. Die Abschwächung erfolgt bevorzugt mittels eines optischen Filters, welcher bevorzugt lediglich im Spektralbereich der Lumineszenzstrahlung der abzuschwächenden Sub-Solarzelle eine Intensitätsverringerung, bevorzugt durch Absorption und/oder Reflektion, bewirkt. Die Intensität kann etwa um 90% bis 99,9% und darüber hinaus abgeschwächt werden. Insbesondere liegt die Verwendung eines dielektrischen Filters im Rahmen der Erfindung.

Untersuchungen des Anmelders zeigen weiter, dass häufig die spektrale Empfindlichkeit unterschiedlicher Gruppen von Detektorelementen zwar unterschiedliche spektrale Schwerpunkte und insbesondere unterschiedliche Maxima im Spektrum aufweisen, aufgrund der Spektralverteilung die Empfindlichkeit jedoch überlappen. Die Intensität der Lumineszenzstrahlung wird daher in einen Überlappungsspektralbereich, in welchem die Empfindlichkeit der Gruppen von Detektorelementen überlappen, abgeschwächt oder vollständig geblockt. Diese Abschwächung oder Blockung erfolgt bevorzugt mittels eines optischen Filters. Entsprechend, weist die erfindungsgemäße Vorrichtung bevorzugt einen optischen Filter auf, um Überlappungsbereiche der spektralen Empfindlichkeit der ersten und der zweiten und ggf. weiteren Gruppen von Detektorelementen auszublenden.

Hierdurch wird eine gleichzeitige Analyse beider Sub-Solarzellen ermöglicht, wobei eine bessere Auftrennung zwischen den beiden Solarzellen erzielt wird, da die Lumineszenzstrahlung im Überlappungsbereich abgeschwächt wird.

Bevorzugte Spektralbereiche zur Abschwächung oder vollständigen Blockung sind beispielsweise 800 nm bis 950 nm oder 1050 nm bis 1200 nm. Die Abschwächung in diesen Spektralbereichen erfolgt bevorzugt um 90% bis 99.99% und darüber hinaus.

Wie zuvor ausgeführt, erfolgt vorteilhafterweise gleichzeitig ein Messen der Lumineszenzstrahlung mittels der ersten Gruppe und mittels der zweiten Gruppe von Detektorelementen des Multielementdetektors. Insbesondere ist es somit vorteilhaft, dass bei einer vorgegebenen Anregungsart durch Beaufschlagen der Solarzelle mit Anregungsstrahlung und/oder Anlegen einer elektrischen Spannung zum Erzeugen der Lumineszenzstrahlung die Analyse beider Sub-Solarzellen erfolgt.

Manche Mehrfachsolarzellen weisen jedoch Sub-Solarzellen auf, die vorteilhafterweise zum Erzielen einer Lumineszenzstrahlung mit ausreichender Intensität mit unterschiedlichen Anregungsbedingungen beaufschlagt werden.

In einer vorteilhaften Ausführungsform wird daher mittels des Multielementdetektors zumindest ein erstes und ein zweites Bild mit unterschiedlichen Anregungsbedingungen zum Erzeugen der Lumineszenzstrahlung aufgenommen und das erste Bild wird zur Analyse einer der Sub-Solarzellen verwendet und das zweite Bild zur Analyse der anderen Sub-Solarzelle.

Es wird somit bei Analyse des einen Bildes lediglich auf die Messsignale einer der beiden Gruppen von Detektorelementen zurückgegriffen und entsprechend bei Analyse der anderen Sub-Solarzelle auf die Messsignale der anderen Gruppe von Detektorelementen. Dennoch ist gegenüber vorbekannten Vorrichtungen ein zeit- und kostengünstiges Verfahren gegeben, da zwar die Aufnahme und das Auswerten von zwei Bildern des Multielementdetektors notwendig ist, dennoch die Verwendung eines Multielementdetektors ohne mechanische Änderungen, d. h. Austausch des Detektors oder Austausch von optischen Filtern, durchgeführt werden kann.

Der Multielementdetektor ist als Farbkamera mit zumindest zwei Farbkanälen ausgebildet, insbesondere als Farb-CCD- oder -CMOS-Kamera. Hierdurch kann in kostengünstiger Weise auf handelsübliche Kameras zurückgegriffen werden, welche bereits ab Werk verschiedene Gruppen von Detektorelementen des Multielementdetektors (insbesondere eines CCD- oder CMOS-Chips) aufweisen, die unterschiedlichen Spektralbereichen zugeordnet sind, beispielsweise den unterschiedlichen Farbkanälen wie beispielsweise bei RGB-Kameras einem R-, einem B- und einem G-Farbkanal.

Hierdurch ergibt sich ein besonders kostengünstiger Aufbau.

Vorteilhafterweise weist der Multielementdetektor eine Bayer-Matrix auf, ist somit als Bayer-Sensor ausgebildet. Auch hier ergibt sich der Vorteil, dass solche Sensoren handelsüblich und somit kostengünstig erworben werden können und bereits eine Aufteilung in unterschiedliche Farbkanäle aufweisen.

In einer weiter vorteilhaften Ausführungsform ist der Multielementdetektor als Multispektralkamera ausgebildet, insbesondere als Hyperspektralkamera.

Solche an sich bekannten Kameras weisen den Vorteil auf, dass eine Aufteilung in eine Vielzahl von Farbkanälen erfolgt und somit mehrere Farbkanäle zur Analyse einer Sub-Solarzelle zusammengefasst werden können. Vorteilhafterweise werden somit die Detektoren einer ersten Gruppe von Farbkanälen zur Analyse der einen Sub-Solarzelle zusammengefasst und die verbleibenden Detektoren zur Analyse der anderen Sub-Solarzelle.

Weitere vorteilhafte Merkmale und Ausführungsformen des erfindungsgemäßen Verfahrens und der erfindungsgemäßen Vorrichtung werden im Folgenden anhand von Ausführungsbeispielen und den Figuren erläutert.

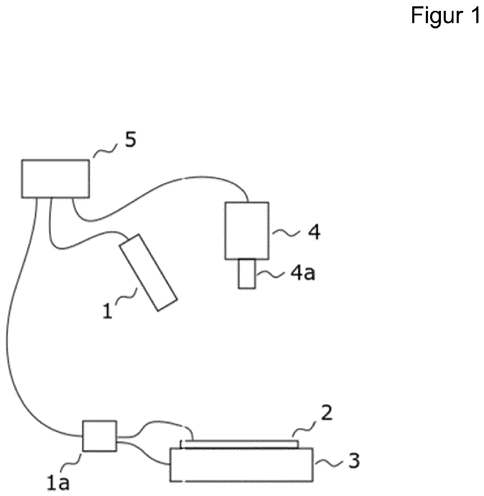

Figur 1 zeigt ein Ausführungsbeispiel einer erfindungsgemäßen Vorrichtung.

In Figur 1 ist schematisch ein erstes Ausführungsbeispiel einer erfindungsgemäßen Vorrichtung zur Analyse einer Mehrfachsolarzelle mit zumindest zwei Sub-Solarzellen mittels Lumineszenzstrahlung dargestellt.

Die Vorrichtung weist eine Anregungseinheit 1 auf, welche als Beleuchtungsquelle ausgebildet ist. Die Vorrichtung gemäß dem vorliegenden Ausführungsbeispiel ist ausgebildet, um eine photovoltaische Mehrfachsolarzelle 2, welche als Tandem-Solarzelle ausgebildet ist, zu analysieren. Die Tandem-Solarzelle weist in an sich bekannter Weise zwei übereinander liegende pn-Übergänge auf. Hierzu sind auf einem Siliziumsubstrat mehrere Schichten angeordnet, unter anderem eine Perowskit-Schicht zum Ausbilden einer oberen Sub-Solarzelle, wohingegen eine zweite, untere Sub-Solarzelle im Siliziumsubstrat ausgebildet ist.

Die Mehrfachsolarzelle 2 ist auf einem Solarzellenträger 3 angeordnet, welcher senkrecht zur Zeichenebene mittels eines Transportbandes bewegt wird, um die Mehrfachsolarzelle in einem Inline-Herstellungsprozess zu bewegen.

Die Vorrichtung weist eine Empfangseinheit 4 auf, welche vorliegend als handelsübliche RGB-Kamera ohne handelsüblichen Infrarot-Sperrfilter ausgebildet ist, welche einen CCD- oder CMOS-Chip (vorliegend einen CCD-Chip) aufweist, welcher als Bayer-Sensor ausgebildet ist und somit eine Bayer-Matrix aufweist.

Der Empfangseinheit 4 ist ein Objektiv 4a zum Abbilden von Lumineszenzstrahlung, welche von der Mehrfachsolarzelle 2 ausgesandt wird, auf dem CCD-Chip vorgeschaltet. Das Objektiv 4a weist darüber hinaus einen Filter auf, um die Anregungsstrahlung der Anregungseinheit 1 zu absorbieren/reflektieren (vorliegend zu absorbieren), sodass etwaige, von der Mehrfachsolarzelle 2 oder anderen Gegenständen reflektierte Anregungsstrahlung nicht mittels der Empfangseinheit detektiert wird.

Die Anregungseinheit 1 sendet vorliegend Anregungsstrahlung mit Wellenlängen von 640 nm und 905 nm aus und der vorgenannte Filter im Objektiv 4a der Empfangseinheit 4 ist entsprechend zur Absorption dieser Strahlung ausgebildet.

Die mittels der Anregungseinheit 1 mit Anregungsstrahlung beaufschlagte Mehrfachsolarzelle 2 sendet aufgrund der Anregung mit jeder der beiden Sub-Solarzellen Lumineszenzstrahlung aus. Die Lumineszenzstrahlung der im Siliziumsubstrat ausgebildeten Sub-Solarzelle liegt im Wesentlichen in einem Spektralbereich von 1000 nm bis 1200 nm. Die von der mittels der Perowskit-Schicht ausgebildeten oberen Sub-Solarzelle ausgesandte Lumineszenzstrahlung liegt im Wesentlichen im Spektralbereich 700 nm bis 850 nm.

Um zusätzlich eine klare Trennung der beiden Spektralbereiche zu erzielen, weist das Objektiv 4a darüber hinaus einen optischen Filter auf, welcher Strahlung im Bereich 850 nm bis 950 nm und somit zwischen den beiden vorgenannten Spektralbereichen absorbiert. Hierdurch ist eine klare Trennung der beiden Spektralbereiche gewährleistet.

Der CCD-Chip der Empfangseinheit 4 ist wie zuvor beschrieben als Bayer-Sensor ausgebildet und weist somit eine Vielzahl von Detektorelementen auf, welche einerseits eine ortsaufgelöste Erfassung der Lumineszenzstrahlung und darüber hinaus eine Erfassung der Lumineszenzstrahlung in drei Farbkanälen ermöglicht.

Die Vorrichtung weist eine Auswerteeinheit 5 auf, welche mit der Anregungseinheit 1 und der Empfangseinheit 4 verbunden ist, um die Anregungseinheit 1 zum Beaufschlagen der Mehrfachsolarzelle 2 mit Anregungsstrahlung zu steuern und Messsignale der Mehrfachsolarzelle 2 aufzuwerten.

Die Funktionsweise der Vorrichtung gemäß dem ersten Ausführungsbeispiel wird nachfolgend anhand eines ersten Ausführungsbeispiels eines erfindungsgemäßen Verfahrens beschrieben:
Mittels der Auswerteeinheit 5 wird die Anregungseinheit 1 gesteuert, um wie zuvor beschrieben die Mehrfachsolarzelle 2 mit Anregungsstrahlung zu beaufschlagen, sodass beide Sub-Solarzellen Lumineszenzstrahlung in einem Verfahrensschritt erzeugen.

In einem Verfahrensschritt B erfolgt mittels der Empfangseinheit 4 ein ortsaufgelöstes Erfassen der Lumineszenzstrahlung.

Wesentlich ist, dass im Verfahrensschritt B die Detektorelemente des Multielementdetektors, vorliegend die einzelnen Pixel des CCD- oder CMOS-Chips, gleichzeitig mit von der Mehrfachsolarzelle abgestrahlter Lumineszenzstrahlung beaufschlagt werden. Hierbei wird mittels aller Gruppen von Detektorelementen, welche dem roten, grünen und blauen Farbkanal zugeordnet sind, ein erster Spektralbereich und mittels einer zweiten Gruppe, zu der ersten Gruppe unterschiedlichen Gruppe von Detektorelementen, welche dem roten Farbkanal zugeordnet sind, somit ein zweiter Spektralbereich erfasst. Die Trennung der beiden Spektralbereiche erfolgt dabei, indem für die Analyse des ersten Spektralbereichs der blaue (oder grüne) Farbkanal betrachtet wird und für die Analyse des zweiten Spektralbereichs das Differenzbild von rotem und blauem (oder grünem) Farbkanal betrachtet wird.

Zur Analyse der Mehrfachsolarzelle 2 ist somit die Aufnahme lediglich eines Bildes mittels der Empfangseinheit 4 notwendig, wobei mittels der Auswerteeinheit 5 die Messsignale der ersten Gruppe von Detektorelementen (der blaue Farbkanal) zur Analyse der Silizium-Sub-Solarzelle und die Differenz der Messsignale der zweiten und dritten Gruppe von Detektorelementen (der rote und blaue Farbkanal) zur Analyse der Silizium-Sub-Solarzellen verwendet werden.

Die Analyse der Lumineszenzstrahlung kann in an sich bekannter Weise erfolgen, insbesondere wie in Bolun Du et al. Nondestructive inspection, testing and evaluation for Si-based, thin film and multi-junction solar cells: An overview Renewable and Sustainable Energy Reviews 78 (2017) 1117-1151 beschrieben oder zur Analyse von Materialparametern wie in DE 10 2010 019 132 beschrieben.

In einer Abwandlung des ersten Ausführungsbeispiels weist die Vorrichtung eine Anregungseinheit 1a auf, welche mit elektrischen Kontakten der Mehrfachsolarzelle 2 verbunden und ausgebildet ist, um die Mehrfachsolarzelle 2 mit elektrischer Spannung zu beaufschlagen, um Lumineszenzstrahlung in den Sub-Solarzellen zu erzeugen. Die Anregungseinheit 1a ist mit der Auswerteeinheit 5 verbunden und wird von dieser zur Durchführung des vorbeschriebenen Verfahrens gesteuert.

### Bezugszeichenliste

- 1, 1a: Anregungseinheit
- 2: Mehrfachsolarzelle
- 3: Solarzellenträger
- 4: Empfangseinheit
- 4a: Objektiv
- 5: Auswerteeinheit

## Patentansprüche

1. Verfahren zur Analyse einer Mehrfachsolarzelle (2) mit zumindest zwei Sub-Solarzellen mittels Lumineszenzstrahlung mit den Verfahrensschritten
A. Erzeugen von Lumineszenzstrahlung in den Sub-Solarzellen durch Beaufschlagen der Mehrfachsolarzelle (2) mit Anregungsstrahlung und/oder Anlegen einer elektrischen Spannung an Kontakte der Mehrfachsolarzelle (2);
B. Ortsaufgelöstes Erfassen der Lumineszenzstrahlung mittels zumindest eines Multielementdetektors mit einer Mehrzahl von Detektorelementen und Auswerten unterschiedlicher Spektralbereiche der Lumineszenzstrahlung für die unterschiedlichen Sub-Solarzellen, wobei, der Multielementendetektor als Farbkamera mit zumindest zwei Farbkanälen ausgebildet ist und in Verfahrensschritt B die Detektorelemente gleichzeitig mit von der Mehrfachsolarzelle (2) abgestrahlter Lumineszenzstrahlung beaufschlagt werden, wobei mittels einer ersten Gruppe von Detektorelementen ein erster Spektralbereich und mittels zumindest einer zweiten, zu der ersten Gruppe unterschiedlichen Gruppe von Detektorelementen zumindest ein zweiter Spektralbereich erfasst wird, wobei erster und zweiter Spektralbereich unterschiedlich sind und spektrale Empfindlichkeiten unterschiedlicher Gruppen von Detektorelementen unterschiedliche spektrale Schwerpunkte aufweisen und überlappen und wobei die Intensität der Lumineszenzstrahlung in einem Überlappungs-Spektralbereich, in welchem die Sensitivität der zumindest zwei Gruppen von Detektorelementen überlappen, abgeschwächt oder vollständig geblockt wird.

2. Verfahren nach Anspruch 1,
**dadurch gekennzeichnet,**
**dass** die Messsignale der Detektorelemente des Multielementdetektors gruppenweise ausgewertet werden, insbesondere, dass die Messsignale der ersten Gruppe zur Analyse einer Sub-Solarzelle und die Messsignale der zweiten Gruppe zur Analyse der anderen Sub-Solarzelle und bevorzugt die Messsignale weiterer Gruppen zur Analyse der weiteren Sub-Solarzellen verwendet werden und/oder bevorzugt eine Kombination der Messsignale mehrere Gruppen, insbesondere eine Subtraktion der Messsignale von zwei oder mehr Gruppen zur Analyse einer Sub-Solarzelle verwendet wird.

3. Verfahren nach einem der vorangegangenen Ansprüche,
**dadurch gekennzeichnet,**
**dass** mittels des Multielementdetektors zumindest ein Bild der Lumineszenzstrahlung aufgenommen wird, zu welchem gruppenweise die Messsignale der ersten Gruppe von Detektorelementen und zumindest der zweiten Gruppe von Detektorelementen separat ausgewertet werden.

4. Verfahren nach einem der vorangegangenen Ansprüche,
**dadurch gekennzeichnet,**
**dass** selektiv die Lumineszenzstrahlung derjenigen Sub-Solarzelle abgeschwächt wird, deren Luminszenzstrahlung eine höhere Intensität gegenüber der anderen Sub-Solarzelle aufweist, insbesondere mittels eines optischen Filters.

5. Verfahren nach einem der vorangegangenen Ansprüche,
**dadurch gekennzeichnet,**
**dass** die Intensität der Lumineszenzstrahlung in dem Überlappungs-Spektralbereich, in welchem die Sensitivität der zumindest zwei Gruppen von Detektorelementen überlappen, mittels eines optischen Filters abgeschwächt oder vollständig geblockt wird.

6. Verfahren nach einem der vorangegangenen Ansprüche,
**dadurch gekennzeichnet,**
**dass** mittels des Multielementdetektors zumindest ein erstes und ein zweites Bild mit unterschiedlichen Anregungsbedingungen zum Erzeugen der Lumineszenzstrahlung aufgenommen werden und das erste Bild zur Analyse einer der Sub-Solarzellen verwendet wird und das zweite Bild zur Analyse der anderen Sub-Solarzelle.

7. Vorrichtung zur Analyse einer Mehrfachsolarzelle (2) mit zumindest zwei Sub-Solarzellen mittels Lumineszenzstrahlung,
mit einer Anregungseinheit (1, 1a) zum Anlegen einer elektrischen Spannung an die Mehrfachsolarzelle (2) und/oder zum Beaufschlagen der Mehrfachsolarzelle (2) mit elektromagnetischer Anregungsstrahlung, um Lumineszenzstrahlung in den Sub-Solarzellen zu erzeugen,
mit einer Empfangseinheit (4), welche zumindest einen Multielementdetektor mit einer Mehrzahl von Detektorelementen aufweist und ausgebildet ist, von der Mehrfachsolarzelle (2) ausgesandte Lumineszenzstrahlung mittels der Detektorelemente ortsaufgelöst zu erfassen und
mit einer Auswerteeinheit (5) zur Auswertung der Messsignale der Detektorelemente,
wobei,
die Vorrichtung ausgebildet ist, eine erste Gruppe von Detektorelementen mit einem ersten Spektralbereich der Lumineszenzstrahlung und zumindest eine zweite, zu der ersten Gruppe unterschiedlichen Gruppe von Detektorelemente gleichzeitig mit zumindest einem zweiten Spektralbereich der Lumineszenzstrahlung zu beaufschlagen, wobei erster und zweiter und bevorzugt weitere Spektralbereiche unterschiedlich sind und spektrale Empfindlichkeiten unterschiedlicher Gruppen von Detektorelementen unterschiedliche spektrale Schwerpunkte aufweisen und überlappen und der Multielementendetektor als Farbkamera mit mindestens zwei Farbkanälen ausgebildet ist, wobei die Intensität der Lumineszenzstrahlung in einem Überlappungs-Spektralbereich, in welchem die Sensitivität der zumindest zwei Gruppen von Detektorelementen überlappen, abgeschwächt oder vollständig geblockt wird.

8. Vorrichtung nach Anspruch 7,
**dadurch gekennzeichnet,**
**dass** der Multielementdetektor als Farb-CCD- oder -CMOS-Kamera ausgebildet ist..

9. Vorrichtung nach einem der Ansprüche 7 bis 8,
**dadurch gekennzeichnet,**
**dass** der Multielementdetektor einer Bayer-Matrix aufweist.

10. Vorrichtung nach einem der Ansprüche 7 bis 9,
**dadurch gekennzeichnet,**
**dass** der Multielementdetektor als Multispektralkamera, insbesondere als Hyperspektralkamera ausgebildet ist.

11. Vorrichtung nach einem der Ansprüche 7 bis 10,
**dadurch gekennzeichnet,**
**dass** selektiv die Lumineszenzstrahlung derjenigen Sub-Solarzelle abgeschwächt wird, deren Lumineszenzstrahlung eine höhere Intensität gegenüber der anderen Sub-Solarzelle aufweist, insbesondere mittels eines optischen Filters.

12. Vorrichtung nach einem der Ansprüche 7 bis 11,
**dadurch gekennzeichnet,**
**dass** die Intensität der Lumineszenzstrahlung in einem Überlappungs-Spektralbereich, in welchem die Sensitivität der zumindest zwei Gruppen von Detektorelementen überlappen, mittels eines optischen Filters abgeschwächt oder vollständig geblockt wird..

## Claims

1. A method for the analysis of a multiple solar cell (2) with at least two sub-solar cells by means of luminescence radiation with the method steps:
A. Generating luminescence radiation in the sub-solar cells by applying excitation radiation to the multiple solar cell (2) and/or applying an electrical voltage to contacts of the multiple solar cell (2);
B. Spatially resolved detecting the luminescence radiation by means of at least one multi-element detector with a plurality of detector elements and evaluating different spectral ranges of the luminescence radiation for the different sub-solar cells,
wherein the multi-element detector is designed as a color camera with at least two color channels and in method step B, the detector elements are simultaneously exposed to luminescence radiation radiated from the multiple solar cell (2), wherein a first spectral region is detected by means of a first group of detector elements and at least a second spectral region is detected by means of at least a second group different from the first group of detector elements, wherein the first and second spectral regions are different and spectral sensitivities of different groups of detector elements have different spectral focal points and overlap, and wherein the intensity of the luminescence radiation in an overlapping spectral region, In which the sensitivity of at least two groups of detector elements overlap, is attenuated or completely blocked.

2. The method according to claim 1,
**characterized in that**
the measurement signals of the detector elements of the multi-element detector are evaluated in groups, in particular, **in that** the measurement signals of the first group for the analysis of a sub-solar cell and the measurement signals of the second group for the analysis of the other sub-solar cell and preferably the measurement signals of further groups for the analysis of the further sub-solar cells are used and/or preferably a combination of the measurement signals of several groups, in particular, a subtraction of the measurement signals from two or more groups, is used for the analysis of a sub-solar cell.

3. The method according to any one of the preceding claims,
**characterized in that**
by means of the multi-element detector at least one image of the luminescence radiation is recorded, for which the measurement signals of the first group of detector elements and at least the second group of detector elements are evaluated separately in groups.

4. The method according to any one of the preceding claims,
**characterized in that**
the luminescence radiation of a sub-solar cell is selectively attenuated, the luminescence radiation of which has a higher intensity compared to the other sub-solar cell, in particular by means of an optical filter.

5. The method according to any one of the preceding claims,
**characterized in that**
the intensity of the luminescence radiation in the overlapping spectral region, in which the sensitivity of the at least two groups of detector elements overlap, is attenuated by means of an optical filter or is completely blocked.

6. The method according to any one of the preceding claims,
**characterized in that**
by means of the multi-element detector at least a first and a second image with different excitation conditions for generating the luminescence radiation are recorded and the first image is used for the analysis of one of the sub-solar cells and the second image is used for the analysis of the other sub-solar cell.

7. A device for the analysis of a multiple solar cell (2) with at least two sub-solar cells by means of luminescence radiation,
with an excitation unit (1, 1a) for applying an electrical voltage to the multiple solar cell (2) and/or for applying electromagnetic excitation radiation to the multiple solar cell (2) in order to generate luminescence radiation in the sub-solar cells,
with a receiving unit (4), which has at least one multi-element detector having a plurality of detector elements and is designed to detect luminescence radiation emitted by the multi-solar cell (2) spatially resolved by means of the detector elements and
with an evaluation unit (5) for evaluating the measurement signals of the detector elements,
wherein the device is designed to apply to a first group of detector elements a first spectral region of the luminescence radiation and to at least a second group, different from the first group of detector elements, simultaneously at least a second spectral region of the luminescence radiation, wherein the first and second and preferably further spectral regions are different and spectral sensitivities of different groups of detector elements have different spectral focal points and overlap and the multi-element detector is designed as a color camera with at least two color channels, wherein the intensity of the luminescence radiation in an overlapping spectral region, in which the sensitivity of at least two groups of detector elements overlap, is attenuated or completely blocked.

8. The device according to claim 7,
**characterized in that**
the multi-element detector is designed as a color CCD or CMOS camera.

9. The device according to any one of claims 7 to 8,
**characterized in that**
the multi-element detector has a Bayer matrix.

10. The device according to any one of claims 7 to 9,
**characterized in that**
the multi-element detector is designed as a multispectral camera, in particular as a hyperspectral camera.

11. The device according to any one of claims 7 to 10,
**characterized in that**
the luminescence radiation of a sub-solar cell is selectively attenuated, the luminescence radiation of which has a higher intensity compared to the other sub-solar cell, in particular by means of an optical filter.

12. The device according to any one of claims 7 to 11,
**characterized in that**
the intensity of the luminescence radiation in an overlapping spectral region, in which the sensitivity of the at least two groups of detector elements overlap, is attenuated by means of an optical filter or is completely blocked.

## Revendications

1. Procédé d'analyse d'une cellule solaire multiple (2) avec au moins deux sous-cellules solaires au moyen d'un rayonnement luminescent avec les étapes de procédé suivantes
A. la génération d'un rayonnement luminescent dans les sous-cellules solaires par alimentation de la cellule solaire multiple (2) en rayonnement d'excitation et/ou application d'une tension électrique aux contacts de la cellule solaire multiple (2) ;
B. la détection selon une résolution locale du rayonnement luminescent au moyen d'au moins un détecteur multiélément avec une pluralité d'éléments détecteurs et l'évaluation de différentes plages spectrales du rayonnement luminescent pour les différentes sous-cellules solaires,
dans lequel le détecteur multiélément est configuré comme caméra couleur avec au moins deux canaux de couleur et dans l'étape de procédé B, les éléments détecteurs sont simultanément alimentés en rayonnement luminescent émis par la cellule solaire multiple (2), dans lequel une première plage spectrale est détectée au moyen d'un premier groupe d'éléments détecteurs et au moins une seconde plage spectrale est détectée au moyen d'au moins un second groupe d'éléments détecteurs différent du premier groupe, dans lequel la première et la seconde plage spectrale sont différentes et des sensibilités spectrales de différents groupes d'éléments détecteurs présentent différents centres de gravité spectraux et se chevauchent et dans lequel l'intensité du rayonnement luminescent est affaiblie ou complètement bloquée dans une plage spectrale de chevauchement, dans laquelle les sensibilités des au moins deux groupes d'éléments détecteurs se chevauchent.

2. Procédé selon la revendication 1,
**caractérisé en ce que**
les signaux de mesure des éléments détecteurs du détecteur multiélément sont évalués par groupes, en particulier **en ce que** les signaux de mesure du premier groupe sont utilisés pour l'analyse d'une sous-cellule solaire et les signaux de mesure du second groupe sont utilisés pour l'analyse de l'autre sous-cellule solaire et les signaux de mesure d'autres groupes sont de préférence utilisés pour l'analyse des autres sous-cellules solaires et/ou une combinaison des signaux de mesure de plusieurs groupes est de préférence utilisée, en particulier une soustraction des signaux de mesure de deux groupes ou plus pour l'analyse d'une sous-cellule solaire.

3. Procédé selon l'une quelconque des revendications précédentes,
**caractérisé en ce que**
au moins une image du rayonnement luminescent est enregistrée au moyen du détecteur multiélément, pour laquelle les signaux de mesure du premier groupe d'éléments détecteurs et au moins du second groupe d'éléments détecteurs sont évalués séparément par groupes.

4. Procédé selon l'une quelconque des revendications précédentes,
**caractérisé en ce que**
le rayonnement luminescent de la sous-cellule solaire est sélectivement affaibli, dont le rayonnement luminescent présente une intensité supérieure par rapport à l'autre sous-cellule solaire, en particulier au moyen d'un filtre optique.

5. Procédé selon l'une quelconque des revendications précédentes,
**caractérisé en ce que**
l'intensité du rayonnement luminescent est affaiblie ou complètement bloquée au moyen d'un filtre optique dans la plage spectrale de chevauchement, dans laquelle les sensibilités des au moins deux groupes d'éléments détecteurs se chevauchent.

6. Procédé selon l'une quelconque des revendications précédentes,
**caractérisé en ce que**
au moins une première et une seconde image sont enregistrées avec différentes conditions d'excitation pour la génération du rayonnement luminescent au moyen du détecteur multiélément et la première image est utilisée pour l'analyse d'une des sous-cellules solaires et la seconde image pour l'analyse de l'autre sous-cellule solaire.

7. Dispositif d'analyse d'une cellule solaire multiple (2) avec au moins deux sous-cellules solaires au moyen d'un rayonnement luminescent,
avec une unité d'excitation (1, 1a) pour l'application d'une tension électrique à la cellule solaire multiple (2) et/ou pour l'alimentation de la cellule solaire multiple (2) en rayonnement d'excitation électromagnétique afin de générer un rayonnement luminescent dans les sous-cellules solaires,
avec une unité de réception (4) qui présente au moins un détecteur multiélément avec une pluralité d'éléments détecteurs et est configurée afin de détecter selon une résolution locale un rayonnement luminescent émis par la cellule solaire multiple (2) au moyen des éléments détecteurs et
avec une unité d'évaluation (5) pour l'évaluation des signaux de mesure des éléments détecteurs,
dans lequel le dispositif est configuré afin d'alimenter simultanément un premier groupe d'éléments détecteurs en une première plage spectrale du rayonnement luminescent et au moins un second groupe différent du premier groupe d'éléments détecteurs en au moins une seconde plage spectrale du rayonnement luminescent, dans lequel les première et seconde et de préférence autres plages spectrales sont différentes et des sensibilités spectrales de différents groupes d'éléments détecteurs présentent différents points de gravité spectraux et se chevauchent et le détecteur multiélément est configuré comme caméra couleur avec au moins deux canaux de couleur, dans lequel l'intensité du rayonnement luminescent est affaiblie ou complètement bloquée dans une plage spectrale de chevauchement, dans laquelle les sensibilités des au moins deux groupes d'éléments détecteurs se chevauchent.

8. Dispositif selon la revendication 7,
**caractérisé en ce que**
le détecteur multiélément est configuré comme caméra CCD ou CMOS de couleur.

9. Dispositif selon l'une quelconque des revendications 7 à 8,
**caractérisé en ce que**
le détecteur multiélément présente une matrice Bayer.

10. Dispositif selon l'une quelconque des revendications 7 à 9,
**caractérisé en ce que**
le détecteur multiélément est configuré comme caméra multispectrale, en particulier comme caméra hyperspectrale.

11. Dispositif selon l'une quelconque des revendications 7 à 10,
**caractérisé en ce que**
le rayonnement luminescent de la sous-cellule solaire est sélectivement affaibli, dont le rayonnement luminescent présente une intensité supérieure par rapport à l'autre sous-cellule solaire, en particulier au moyen d'un filtre optique.

12. Dispositif selon l'une quelconque des revendications 7 à 11,
**caractérisé en ce que**
l'intensité du rayonnement luminescent est affaiblie ou complètement bloquée au moyen d'un filtre optique dans une plage spectrale de chevauchement, dans laquelle les sensibilités des au moins deux groupes d'éléments détecteurs se chevauchent.
